# EUROPÄISCHE PATENTSCHRIFT

(11) **EP 1 502 142 B1**
(45) Veröffentlichungstag und Bekanntmachung des Hinweises auf die Patenterteilung: **28.06.2006**
(21) Anmeldenummer: 03727357.0
(22) Anmeldetag: 25.04.2003
(51) Int. Cl.: G02B 6/38

(54) **VORRICHTUNG F R EINE GLASFASERVERBINDUNG**
DEVICE FOR AN OPTICAL FIBRE CONNECTION
DISPOSITIF POUR UN RACCORD DE FIBRES OPTIQUES

(30) Priorität: 03.05.2002 DE 10219935
(43) Veröffentlichungstag der Anmeldung: 02.02.2005
(73) Patentinhaber: ADC GMBH, 14167 Berlin (DE)
(72) Erfinder: KAHLE, Eberhard, 12557 Berlin (DE); KRAMER, Anne, 12103 Berlin (DE); ADOMEIT, Jörg, 12307 Berlin (DE)
(86) Internationale Anmeldenummer: PCT/EP2003/004292
(87) Internationale Veröffentlichungsnummer: WO 2003/093883

(56) Entgegenhaltungen:
- EP-A- 0 731 369
- US-A- 5 737 464
- US-B1- 6 367 984
- US-B1- 6 508 593
- PATENT ABSTRACTS OF JAPAN vol. 2000, no. 19, 5. Juni 2001 (2001-06-05) & JP 2001 033658 A (SEIKO INSTRUMENTS INC), 9. Februar 2001 (2001-02-09)

## Beschreibung

Die Erfindung bezieht sich auf eine Vorrichtung für eine koaxiale Glasfaserverbindung umfassend einen Hülsenaufnehmer und ein Kupplungsgehäuse zur Aufnahme des Hülsenaufnehmers.

Es ist bekannt, Glasfasern durch Kupplungen koaxial zu verbinden. Die zu verbindenden Glasfaserenden sind mit Steckverbindern ausgebildet, welche von der Kupplung aufgenommen werden. Die Steckverbinder sind mit hoch präzise gearbeiteten Ferrulen ausgebildet, welche in eine Hülse der entsprechenden Kupplung derart eingeführt werden, daß sich ihre Stirnflächen berühren. Die Hülse ist in einem Hülsenaufnehmer gelagert. Für eine Aufnahme der Steckverbinder ist der Hülsenaufnehmer beispielsweise mit Rasthaken an den beiden Enden ausgebildet. Die äußere Form des Kupplungsgehäuses ist aufgrund gegebener Geometrien bekannter Montageöffnungen festgelegt. Es ist bekannt, für eine leichte Fertigung und Montage das Kupplungsgehäuse zweiteilig auszuführen, bevorzugt mit zwei identischen Gehäusehälften. Um eine mögliche Spaltbildung zwischen den beiden Gehäusehälften zu verhindern werden diese beispielsweise verschweißt.

Aus der US 5, 317,663 ist ein Kupplungsgehäuse für die Aufnahme eines zweiteiligen Hülsenaufnehmers bekannt, wobei das Kupplungsgehäuse einen Grundkörper und eine als Deckel ausgebildete Gehäusewand umfaßt. In den Grundkörper des Kupplungsgehäuses sind Nuten eingearbeitet, in welche am Hülsenaufnehmer ausgebildete komplementäre Federn einsetzbar sind. Die Verlagerung der Verbindungsnaht ist dabei günstig für die Stabilität der Kupplung. Die Ausführung erfordert jedoch mindestens zwei unterschiedliche Werkzeuge für die Herstellung des Grundkörpers und des Deckels.

Aus der japanischen Patentanmeldung JP2000266963 ist ein einteiliges Kupplungsgehäuse bekannt, in welches ein einteiliger Hülsenaufnehmer einsetzbar ist. Der Hülsenaufnehmer ist mit Rastnasen ausgebildet, welche in komplementäre Durchbrüche am Kupplungsgehäuse rasten. Die Durchbrüche am Kupplungsgehäuse sind kostengünstig herstellbar. Nachteilig ist jedoch die Schwächung des Kupplungsgehäuses im Kontaktbereich der Steckverbinder sowie das Eindringen von Staub.

Aus der EP 0 731 369 A2 ist eine Vorrichtung zur koaxialen Verbindung von Glasfaserkabeln bekannt, umfassend ein einteiliges Kupplungsgehäuse und einen einteiligen Hülsenaufnehmer, wobei der Hülsenaufnehmer mit zwei Rastnasen und das Kupplungsgehäuse mit zwei zu den Rastnasen komplementären Rastaufnahmen ausgebildet sind. Jede Rastaufnahme umfasst jeweils zwei Anschläge sowie einen Rasthaken, wobei der Rasthaken zwischen den Anschlägen angeordnet ist. An den Außenseiten zweier gegenüberliegender Gehäusewände sind Flansche angeordnet.

Der Erfindung liegt das technische Problem zugrunde, eine Vorrichtung für eine koaxiale Glasfaserverbindung umfassend ein Kupplungsgehäuse und einen Hülsenaufnehmer zu schaffen, welche bei einer geringen Teilezahl eine hohe Stabilität aufweist.

Die Lösung des Problems ergibt sich durch den Gegenstand mit den Merkmalen des Anspruchs 1. Weitere vorteilhafte Ausgestaltungen der Erfindung ergeben sich aus den Unteransprüchen.

Ein einteiliger Hülsenaufnehmer ist in ein einteiliges Kupplungsgehäuse rastbar, wobei die Rastaufnahme am Kupplungsgehäuse mit einem Rasthaken und zwei Anschlägen ausgebildet ist. Eine Kupplung mit jeweils einteiliger Ausbildung des Kupplungsgehäuses und des Hülsenaufnehmers weist gegenüber Kupplungen mit zweiteiligen Ausbildungen eine höhere Stabilität auf. Durch die einteilige Ausführungsform des Kupplungsgehäuses wird eine mögliche Spaltbildung in der Kontaktstelle zweier Gehäusehälften verhindert. Die Ausformung des Kupplungsgehäuses ist in einem einzigen Werkzeug möglich. Für eine Rastbefestigung des Hülsenaufnehmers in dem Kupplungsgehäuse sind keine Riegelelemente oder ähnliche zusätzlichen Teile notwendig. Die Verwendung einer Rastbefestigung ist zudem geeignet für eine automatisierte Montage. Die Ausarbeitung der Rastaufnahme am Kupplungsgehäuse ist ohne Durchbrüche am Kupplungsgehäuse realisierbar.

Dabei umfasst die Rastaufnahme jeder Rastnase zwei Anschläge sowie einen Rasthaken, wobei der Rasthaken zwischen den Anschlägen angeordnet ist. Die Anordnung erlaubt eine stabile Aufnahme der Rastnase des Hülsenaufnehmers. Eine gegen Verkippung stabile Aufnahme der Rastnase ist auch durch eine Ausbildung umfassend zwei Rasthaken sowie einen mittig liegenden Anschlag denkbar. Die Ausführungsform mit zwei Anschlägen und einem Rasthaken ist jedoch aus fertigungstechnischen Überlegungen zu bevorzugen.

Weiter ist die Rastbefestigung mit zwei Rastaufnahmen an sich gegenüberliegenden Gehäusewänden ausgebildet. Die Ausführungsform mit zwei Rastaufnahmen erlaubt eine stabile Anbindung. Für eine Montage des Hülsenaufnehmers in dem Kupplungsgehäuse ist eine zeitweilige Verformung des Gehäuses für eine Überwindung der vorstehenden Rasthakengeometrie notwendig. Dabei ist es vorteilhaft, wenn das Gehäuse an dieser Stelle eine geringere Materialhäufung aufweist. Das Gehäuse ist für eine Anbindung an eine Frontplatte an den Außenseiten zwei sich gegenüberliegender Gehäusewände mit Flanschen ausgebildet, so dass die Rastaufnahmen an den Innenseiten der beiden anderen Gehäusewände eingearbeitet sind.

In einer bevorzugten Ausführungsform sind Anschlag und Rasthaken der Rastaufnahme ohne Hinterschneidung. Dadurch ist eine kostengünstige Ausbildung des Werkzeugs sowie eine präzise Nachbearbeitung der Kontaktflächen ohne Spezialwerkzeuge möglich.

In einer Weiterbildung ist der Rasthaken mit einer Schräge ausgebildet, welche als Montagehilfe dient. Der Winkel ist entsprechend der geforderten Tragkraft der Rastaufnahme sowie aufgrund maximal zulässiger Kräfte im Fügevorgang geeignet zu wählen.

Für spezielle Anwendungen ist ein Anschlussstück erforderlich, welches beispielsweise als Schutzvorrichtung gegen austretendes Laserlicht dient. Um eine Veränderung der aufgrund gegebener Montageöffnungen festgelegten Außenmaße der Kupplung zu verhindern, kann die Anbindung eines etwaigen Anschlussstückes an das Kupplungsgehäuse durch eine zusätzliche innen liegende Rastbefestigung erfolgen. Die Ausbildung der Rastaufnahmen für den Hülsenaufnehmer an zwei sich gegenüberliegenden Gehäusewänden ermöglicht eine Ausbildung der zusätzlichen Rastbefestigung an den beiden anderen Gehäusewänden. Die Ausarbeitung der Rastbefestigung des Anschlussstücks beeinträchtigt dabei nicht die Ausarbeitung der Rastaufnahmen für den Hülsenaufnehmer.

Die Erfindung wird nachfolgend anhand eines bevorzugten Ausführungsbeispiels näher erläutert. Die Abbildungen zeigen:
- Fig. 1: eine schematische Darstellung einer Kupplung zur koaxialen Glasfaserverbindung,
- Fig. 2: eine perspektivische Ansicht eines Hülsenaufnehmers,
- Fig. 3: eine perspektivische Ansicht auf ein aufgeschnittenes Kupplungsgehäuse und
- Fig. 4: eine Schnittdarstellung des Kupplungsgehäuses mit montiertem Hülsenaufnehmer.

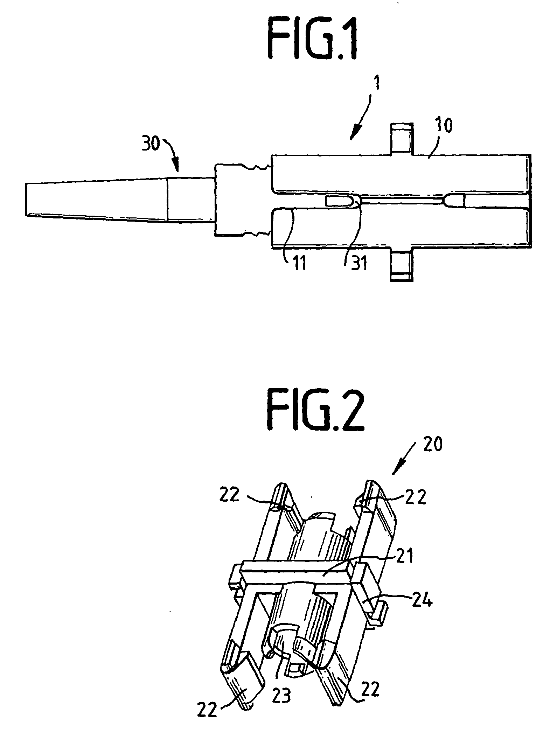

Fig. 1 zeigt schematisch eine Kupplung 1 für die koaxiale Verbindung von Glasfaserkabeln. Die Kupplung 1 umfaßt ein Kupplungsgehäuse 10 in welchem ein verdeckter Hülsenaufnehmer 20 gelagert ist. Das Ende eines Glasfaserkabels ist mit einem Steckverbinder 30 ausgebildet, welcher an beiden Anschlußseiten des verdeckten Hülsenaufnehmers 20 in der Kupplung 1 aufnehmbar ist. Das Kupplungsgehäuse 10 ist mit einer Nut 11 ausgebildet. Für eine gute Orientierung bzw. Positionierung des Steckverbinders 30 in der Kupplung 1 ist der Steckverbinder 30 mit einer dazu komplementären Feder 31 ausgebildet.

Fig. 2 zeigt eine perspektivische Darstellung des Hülsenaufnehmers 20. Der Hülsenaufnehmer 20 ist mit einer Rastnase 21, Rasthaken 22, einer axialen Bohrung 23 und einem Abstandshalter 24 ausgebildet. Die Rastnase 21 ist Teil einer Rastbefestigung zur Fixierung des Hülsenaufnehmers 20 in dem in Fig. 1 dargestellten Kupplungsgehäuse 10. Der Querschnitt der Rastnase 21 ist bevorzugt rechteckförmig ausgebildet. Dadurch ist sowohl eine einfache Fertigung als auch eine hohe Belastbarkeit der zugehörigen Rastbefestigung gegeben. Die Rasthaken 22 dienen zur Aufnahme des in Fig. 1 dargestellten Steckverbinders 30. Für eine Aufnahme des Steckverbinders 30 durch die Rasthaken 22 ist eine Bewegung der Rasthaken 22 notwendig. Der Hülsenaufnehmer 20 ist daher derart in dem in Fig. 2 nicht dargestellten Kupplungsgehäuse 10 zu lagern, daß diese Bewegung nicht behindert wird und ein Steckverbinder 30 von den Rasthaken 22 aufnehmbar ist. Daneben ist eine gute seitliche Führung des Hülsenaufnehmers 20 in dem Kupplungsgehäuse 10 gefordert. Zu diesem Zweck sind Abstandshalter 24 an dem Hülsenaufnehmer 20 vorgesehen. Die Kontaktstelle zweier durch die Kupplung 1 verbundenen Steckverbinder 30 liegt in einer nicht dargestellten Hülse, welche in einer Bohrung 23 des Hülsenaufnehmers 20 einsetzbar ist. Das Material der Hülse ist dabei entsprechend der gestellten Anforderungen an Verbindungsqualität wählbar.

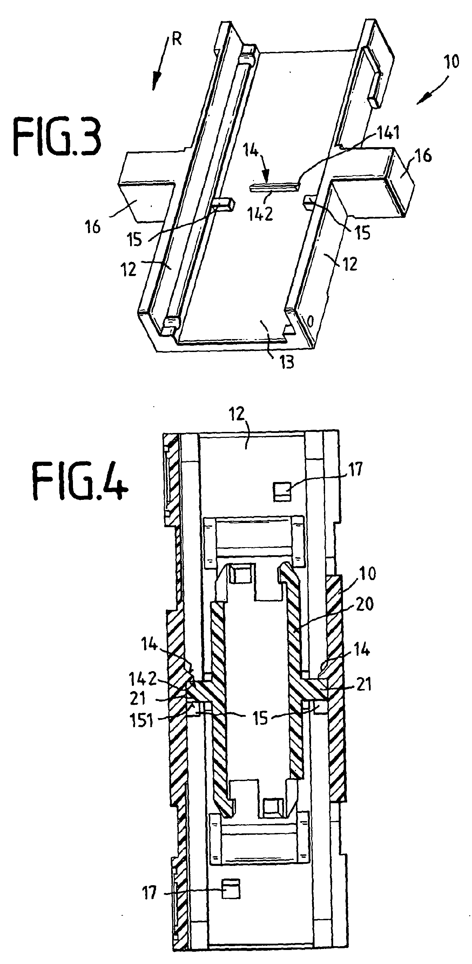

Fig. 3 zeigt eine perspektivische Darstellung des aufgeschnittenen Kupplungsgehäuses 10. Das Kupplungsgehäuse 10 ist an den Außenseiten zweier Gehäusewände 12 mit Flanschen 16 ausgebildet, durch welche das Kupplungsgehäuse 10 an eine nicht dargestellte Frontplatte anbindbar ist. In dem Kupplungsgehäuse 10 ist ein rechteckförmiger Durchgriff für eine Aufnahme des in Fig. 2 dargestellten Hülsenaufnehmers 20 ausgearbeitet. An einer Gehäusewand 13 und der nicht dargestellten gegenüberliegenden Gehäusewand ist jeweils eine Rastaufnahme, umfassend einen Rasthaken 14 und zwei Anschläge 15, eingearbeitet. Zwischen dem Rasthaken 14 und den Anschlägen 15 ist die in Fig. 2 dargestellte Rastnase 21 des Hülsenaufnehmers 20 fixierbar. Der Hülsenaufnehmer 20 ist in Rastrichtung R in dem einteiligen ausgeführten Kupplungsgehäuse 10 automatisch montierbar. Der Rasthaken 14 ist für eine Unterstützung des Einrastvorgangs mit einer Schräge 141 ausgebildet. Im Rastvorgang ist eine leichte Verformung des Kupplungsgehäuses 10 für eine Überwindung des Rasthakens 14 notwendig. Die Gehäusewände 12 weisen in diesem Bereich eine Materialhäufung aufgrund der üblicherweise vorhandenen Flansche 16 auf. Die Rastaufnahmen sind daher bevorzugt an den Gehäusewänden 13 ausgebildet. Durch eine Vermeidung von Hinterschneidungen ist das Kupplungsgehäuse 10 mit einem einfachen Werkzeug kostengünstig als Kunststoffspritzguß herstellbar. Die in Fig. 3 verdeckten Kontaktflächen 151 der Anschläge 15 sind durch einen Zugriff in Rastrichtung R präzise bearbeitbar. Durch einen Zugriff entgegen der Rastrichtung R ist eine Kontaktfläche 142 des Rasthakens 14 bearbeitbar. Für eine Nachbearbeitung der Kontaktflächen 142, 151 ist daher kein Spezialwerkzeug notwendig.

Fig. 4 zeigt das Kupplungsgehäuse 10 mit einem montierten Hülsenaufnehmer 20. Die Bezugszeichen entsprechen dabei den vorangegangenen Figuren. Der Hülsenaufnehmer 20 ist über die Rastnase 21 zwischen den Rasthaken 14 und den Anschlägen 15 fixiert. Die Fixierung des Hülsenaufnehmers 20 benötigt keine weiteren Riegelelemente. Die Kontaktflächen 142, 151 der Rastaufnahme sind exakt fertigbar, so daß ein Spiel vermeidbar ist.

Die Außenform der Kupplung 1 ist aufgrund der gegebenen Geometrie einer Montageöffnung bestimmt, lediglich die Länge der Kupplung 1 ist in Grenzen variierbar. Beispielsweise ist das Kupplungsgehäuse 10 durch ein Anschlußstück verlängerbar, durch welches ein Schutz vor austretender Laserstrahlung realisiert wird. Daneben ist auch ein Aufsetzen von Staubschutzvorrichtungen auf das Kupplungsgehäuse 10 bei gezogenem Steckverbinder 30 denkbar. Zur Aufnahme eines Anschlußstücks sind die Gehäusewände 12 an Abschlüssen des Kupplungsgehäuses 10 mit zusätzlichen Rastnasen 17 ausgebildet. Eine Ausarbeitung der Rastnasen 17 beeinträchtigt die Ausarbeitung der Rastaufnahme für den Hülsenaufnehmer nicht. Um Hinterschneidungen zu vermeiden, sind die Rastnasen 17 diagonal versetzt angeordnet.

### Bezugszeichenliste

- 1: Kupplung
- 10: Kupplungsgehäuse
- 11: Nut
- 12: Gehäusewand
- 13: Gehäusewand
- 14: Rasthaken
- 141: Schräge
- 142: Kontaktfläche
- 15: Anschlag
- 151: Kontaktfläche
- 16: Flansch
- 17: Rastnase
- 20: Hülsenaufnehmer
- 21: Rastnase
- 22: Rasthaken
- 23: Bohrung
- 24: Abstandshalter
- 30: Stecker
- 31: Feder

## Patentansprüche

1. Vorrichtung zur koaxialen Verbindung von Glasfaserkabeln, umfassend ein einteiliges Kupplungsgehäuse (10) und einen einteiligen Hülsenaufnehmer (20), wobei der Hülsenaufnehmer (20) mit zwei Rastnasen (21) und das Kupplungsgehäuse (10) mit zwei zu den Rastnasen (21) komplementären Rastaufnahmen ausgebildet sind und jede Rastaufnahme jeweils zwei Anschläge (15) sowie einen Rasthaken (14) umfasst, wobei der Rasthaken (14) zwischen den Anschlägen (15) angeordnet ist, und an den Außenseiten zweier gegenüberliegender Gehäusewände (12) Flansche angeordnet sind,
**dadurch gekennzeichnet, dass**
die Rastaufnahmen an gegenüberliegenden Gehäusewänden (13) angeordnet sind, die zu den Gehäusewänden (12) mit den Flanschen (16) benachbart sind.

2. Vorrichtung nach Anspruch 1, **dadurch gekennzeichnet, dass** die Rastaufnahme ohne Hinterschneidung ausgebildet ist.

3. Vorrichtung nach Anspruch 1 oder 2, **dadurch gekennzeichnet, dass** der Rasthaken (14) mit einer Schräge (141) ausgebildet ist.

## Claims

1. Device for the coaxial connection of fibre-optic cables, comprising a single-piece coupling housing (10) and a single-piece sleeve mount (20), the sleeve mount (20) being designed with two latching noses (21) and the coupling housing (10) being designed with two latching mounts which complement the latching noses (21), and each latching mount comprising in each case two stops (15) and one latching hook (14), the latching hook (14) being arranged between the stops (15), and flanges being arranged on the outsides of two mutually opposite housing walls (12), **characterized in that** the latching mounts are arranged on mutually opposite housing walls (13), which are adjacent to the housing walls (12) with the flanges (16).

2. Device according to Claim 1, **characterized in that** the latching mount is designed without any undercut.

3. Device according to Claim 1, **characterized in that** the latching hook (14) is designed with a slope (141).

## Revendications

1. Dispositif pour la connexion axiale de câbles à fibres optiques, comprenant une boîte d'accouplement d'une seule pièce (10) et un logement de douille d'une seule pièce (20), le logement de douille (20) étant réalisé avec deux nez d'encliquetage (21) et la boîte d'accouplement (10) étant réalisée avec deux logements d'encliquetage complémentaires des nez d'encliquetage (21) et chaque logement d'encliquetage comprenant à chaque fois deux butées (15) ainsi qu'un crochet d'encliquetage (14), le crochet d'encliquetage (14) étant disposé entre les butées (15), et des brides étant disposées sur les côtés extérieurs de deux parois opposées (12) de la boîte,
**caractérisé en ce que**
les logements d'encliquetage sont disposés sur des parois opposées (13) de la boîte qui sont adjacentes aux parois (12) de la boîte avec les brides (16).

2. Dispositif selon la revendication 1, **caractérisé en ce que** le logement d'encliquetage est réalisé sans contre-dépouille.

3. Dispositif selon la revendication 1 ou 2, **caractérisé en ce que** le crochet d'encliquetage (14) est réalisé avec un biseau (141).
